# EUROPEAN PATENT SPECIFICATION

(11) **EP 4 403 991 B1**
(45) Date of publication and mention of the grant of the patent: **02.12.2026**
(21) Application number: 22869275.2
(22) Date of filing: 14.09.2022
(51) Int. Cl.: G03B 9/02, G02B 26/00, H04N 23/75, G03B 30/00

(54) **VARIABLE APERTURE, CAMERA MODULE, AND ELECTRONIC DEVICE**
VARIABLE BLENDE, KAMERAMODUL UND ELEKTRONISCHE VORRICHTUNG
OUVERTURE VARIABLE, MODULE DE CAMÉRA ET DISPOSITIF ÉLECTRONIQUE

(30) Priority: 16.09.2021 CN 202111087937
(43) Date of publication of application: 24.07.2024
(73) Proprietor: Vivo Mobile Communication Co., Ltd., Dongguan, Guangdong 523863 (CN)
(72) Inventor: HUANG, Wei, Dongguan, Guangdong 523863 (CN)
(74) Representative: Lavoix
(86) International application number: PCT/CN2022/118783
(87) International publication number: WO 2023/040906

(56) References cited:
- EP-A1- 2 546 691
- CN-A- 101 988 984
- CN-A- 102 879 899
- CN-A- 110 501 828
- CN-A- 110 609 380
- CN-A- 110 609 380
- CN-A- 110 830 687
- CN-A- 111 726 510
- CN-A- 112 368 609
- CN-A- 113 759 635
- US-A1- 2007 286 597
- US-A1- 2010 294 920
- US-A1- 2013 306 480

## Description

### TECHNICAL FIELD

This application belongs to the technical field of communication devices, and in particular, relates to a variable aperture, a camera module, and an electronic device.

### BACKGROUND

For a camera module, a variable aperture is configured to control an amount of entered light and a depth of field of the camera module, to meet different shooting requirements. A large aperture allows a large amount of entered light. A main part of an image shot in a large aperture mode has relatively high quality, and an edge of the image has relatively poor quality. A small aperture allows a small amount of entered light. A blurred degree of a main part and a background in an image shot in a small aperture mode is relatively low, which can improve a problem of poor quality of the edge of the image shot in the large aperture mode.

However, because the small aperture allows the small amount of entered light, the shot image has low definition. In addition, in the small aperture mode, close-up photography or macro photography is usually performed, a lens is close to a photographed object, and the camera module has a specific light shielding effect. As a result, an overall shooting environment is dark, and the amount of entered light is further reduced in the small aperture mode, so that the shot image has low definition, and image quality is poor.

EP2546691A1 discloses an aperture adjusting device for adjusting an ap-erture through which light is transmitted. The aperture adjusting device includes: a chamber; a first fluid and a second fluid disposed within the chamber. The first fluid and second fluid are not mixed with each other. The first fluid transmits light and the second fluid blocks or absorbs light. A first electrode unit is disposed on an inner surface of the chamber, and includes one or more electrodes to which a voltage may be applied to form an electric field in the chamber. An aperture within the chamber through which light is transmitted is adjustable by adjusting an interfacial location between the first fluid and the second fluid by modifying the electric field.

In US20070286597A1, it is disclosed that cameras such as electronic video surveillance cameras use an iris to adjust the total amount of light reaching the sensor element. An electrically adjustable iris composed of a magnetic fluid disposed within an aperture construction assembly allows the optical aperture to be adjusted dynamically and allows for more rapid change to optimum aperture settings for varying external lighting conditions.

### SUMMARY

Embodiments of this application are intended to provide a variable aperture, a camera module, and an electronic device, which can resolve a problem, in related technologies, of poor image quality due to a small amount of entered light when the camera module performs shooting in a small aperture mode.

To resolve the technical problem, this application is implemented as defined in the claims.

According to a first aspect, the present invention discloses a variable aperture, including a first light-transmitting substrate, a second light-transmitting substrate, light-transmitting fluid, light-shielding fluid, a driving mechanism, and a first light-supplementing element.

The first light-transmitting substrate and the second light-transmitting substrate are disposed opposite to each other, and a sealed chamber is disposed between the first light-transmitting substrate and the second light-transmitting substrate. The light-transmitting fluid and the light-shielding fluid are fluidly provided in the sealed chamber, and the light-transmitting fluid and the light-shielding fluid are immiscible with each other. The light-transmitting fluid and the light-shielding fluid are used to form a light-transmitting region and a light-shielding region, and the light-shielding region is disposed around the light-transmitting region.

The driving mechanism is configured to drive the light-transmitting fluid and the light-shielding fluid to flow. When the light-transmitting fluid and the light-shielding fluid flow, an area of the light-transmitting region and an area of the light-shielding region may be changed.

In a case that the area of the light-transmitting region is less than a preset area, the first light-supplementing element emits light.

According to a second aspect, the present invention further discloses a camera module, including a variable aperture, a lens, a driving motor, a photosensitive element, an optical filter, and a circuit board.

The variable aperture is disposed opposite to the lens, the variable aperture is located on a light inlet side of the lens, and the variable aperture is the foregoing variable aperture.

The lens is connected to the driving motor, the driving motor can drive the lens to move in a direction of an optical axis of the lens, and the driving motor is electrically connected to the circuit board.

A photosensitive surface of the photosensitive element is disposed opposite to the lens, and the photosensitive element is electrically connected to the circuit board.

The optical filter is disposed between the lens and the photosensitive surface of the photosensitive element.

According to a third aspect, the present invention further discloses an electronic device, including the foregoing camera module.

In an embodiment of this application, the driving mechanism drives the light-transmitting fluid and the light-shielding fluid to flow, which can change the area of the light-transmitting region. The area of the light-transmitting region is a size of an aperture, that is, the driving mechanism drives the light-transmitting fluid and the light-shielding fluid to flow, thereby implementing adjustment of the size of the aperture. In addition, in a case that the area of the light-transmitting region is smaller than the preset area, the first light-supplementing element emits light, which can improve a brightness of a shooting environment, thereby improving an amount of entered light in a small aperture shooting mode, and further improving quality of an image shot in the small aperture shooting mode. It can be learned that the variable aperture disclosed in this application can resolve a problem, in related technologies, of poor image quality due to a small amount of entered light when the camera module performs shooting in the small aperture mode.

### BRIEF DESCRIPTION OF DRAWINGS

FIG. 1 is a schematic structural diagram of a variable aperture in a large aperture mode according to an embodiment of this application;
FIG. 2 is a schematic structural diagram of a variable aperture in a small aperture mode according to an embodiment of this application (directions of arrows are respectively a direction of light-transmitting fluid and a direction of light-shielding fluid that are respectively driven by driving forces);
FIG. 3 is a top view of a variable aperture according to an embodiment of this application;
FIG. 4 is a schematic structural diagram of a camera module in a large aperture mode according to an embodiment of this application; and
FIG. 5 is a schematic structural diagram of a camera module in a small aperture mode according to an embodiment of this application.

### Reference numerals:

110-first light-transmitting substrate, 120-second light-transmitting substrate, 130-light-transmitting partition, 131-first through hole, 140-first sealing structural member, 150-second sealing structural member,
210-light-transmitting fluid, 220-light-shielding fluid,
300-first light-supplementing element,
400-photocell,
510-first flow channel, 520-second flow channel,
600-coil, 610-power supply, 620-coil wire, 630-power supply carrier,
700-light-transmitting cover plate,
800-protective structural member,
910-lens, 920-driving motor, 930-photosensitive element, 931-photosensitive element wire, 940-optical filter, 950-circuit board, 960-optical filter support, 970-base.

### DESCRIPTION OF EMBODIMENTS

The following clearly describes technical solutions in embodiments of this application with reference to accompanying drawings in the embodiments of this application. Apparently, the described embodiments are some but not all of the embodiments of this application.

The terms "first", "second", and the like in this specification and claims of this application are used to distinguish between similar objects instead of describing a specific order or sequence. It should be understood that data used in such a way are interchangeable in a proper circumstance, so that the embodiments of this application can be implemented in an order other than the order illustrated or described herein. Objects classified by "first", "second", and the like are usually of a same type, and the number of objects is not limited. For example, there may be one or more first objects.

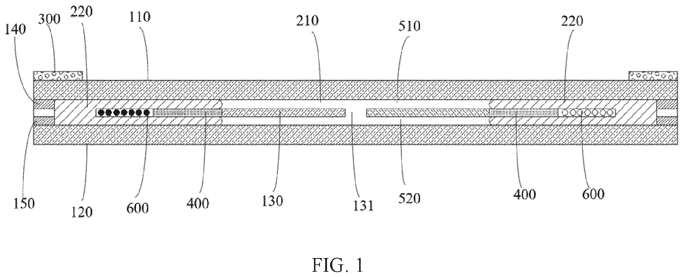

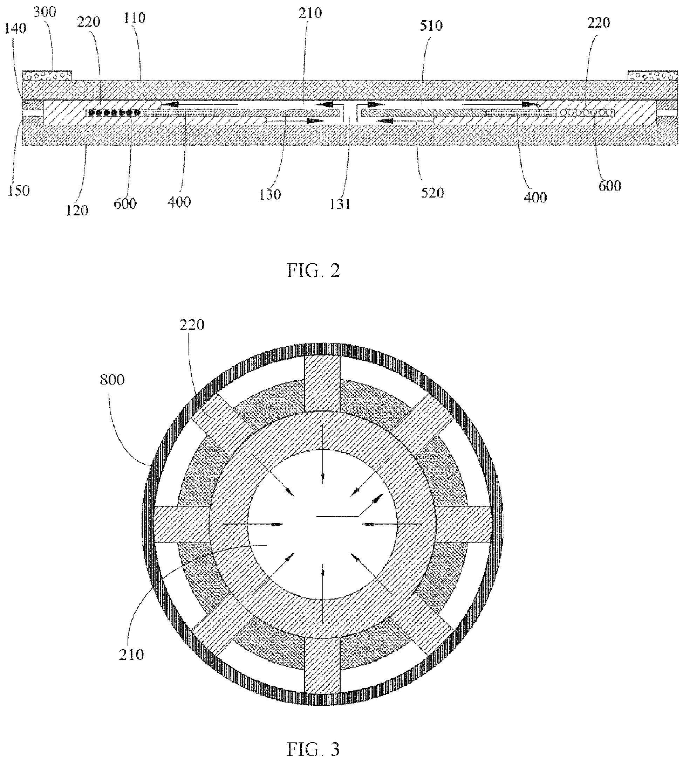

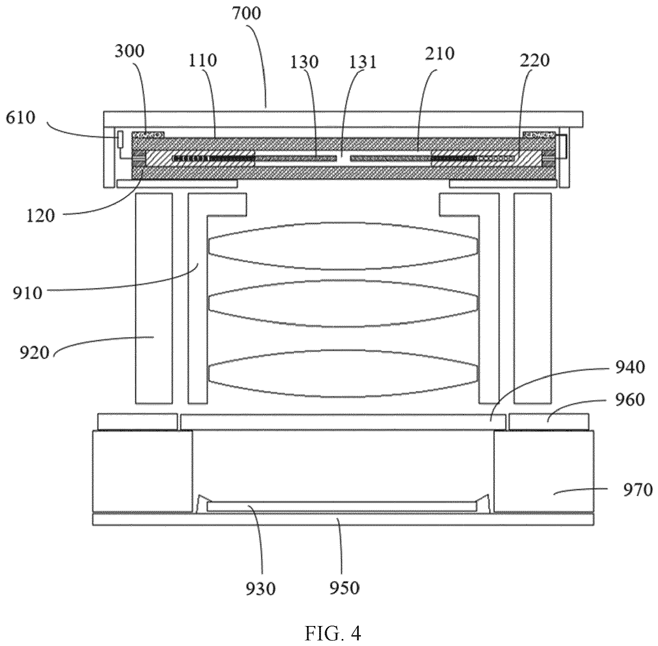

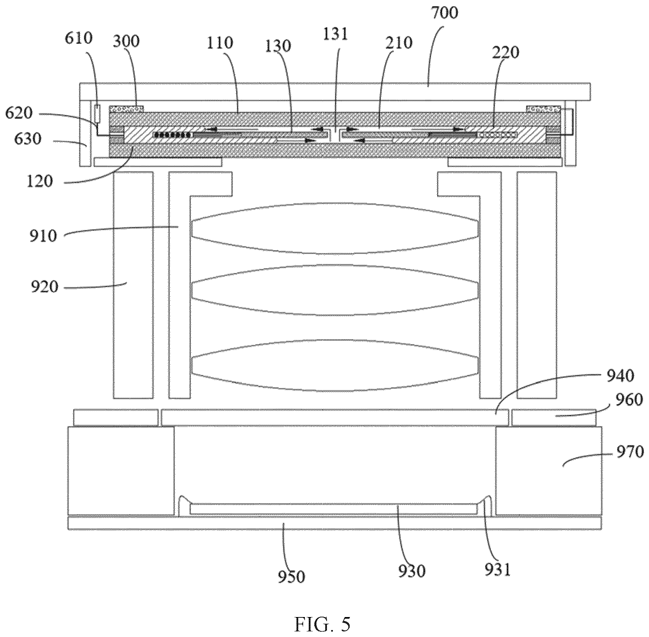

Refer to FIG. 1 to FIG. 5. Embodiments of this application disclose a variable aperture, and the disclosed variable aperture may be used in a camera module. The disclosed variable aperture includes a first light-transmitting substrate 110, a second light-transmitting substrate 120, light-transmitting fluid 210, light-shielding fluid 220, a driving mechanism, and a first light-supplementing element 300.

The first light-transmitting substrate 110 and the second light-transmitting substrate 120 are disposed opposite to each other. A sealed chamber is disposed between the first light-transmitting substrate 110 and the second light-transmitting substrate 120. The first light-transmitting substrate 110 and the second light-transmitting substrate 120 are light-transmitting structures, so that light can penetrate the first light-transmitting substrate 110 and the second light-transmitting substrate 120. Optionally, the first light-transmitting substrate 110 and the second light-transmitting substrate 120 may be transparent glass structural members or transparent resin structural members.

The light-transmitting fluid 210 and the light-shielding fluid 220 are fluidly provided in the sealed chamber, and the light-transmitting fluid 210 and the light-shielding fluid 220 are immiscible with each other. The light-transmitting fluid 210 and the light-shielding fluid 220 are used to form a light-transmitting region and a light-shielding region, and the light-shielding region is disposed around the light-transmitting region. Light can penetrate the light-transmitting fluid 210, and the light-transmitting fluid 210 may be transparent fluid. Light cannot penetrate the light-shielding fluid 220, and the light-shielding fluid 220 may be opaque fluid.

A part that is of the light-transmitting fluid 210 and that enables light to penetrate the first light-transmitting substrate 110, the light-transmitting fluid 210, and the second light-transmitting substrate 120 sequentially forms the light-transmitting region. That is, light-transmitting holes for light to penetrate the variable aperture are formed in the light-transmitting region. A size of the light-transmitting region is a size of the light-transmitting hole provided in the variable aperture, that is, a size of the aperture. Each region in which the light-shielding fluid 220 is located can block light from penetrating, and therefore each region in which the light-shielding fluid 220 is the light-shielding region.

In a case that the light-transmitting fluid 210 and the light-shielding fluid 220 do not flow, if a position at which the light-transmitting region is located and a size of the light-transmitting region are fixed, the size of the aperture is fixed. In a case that the light-transmitting fluid 210 and the light-shielding fluid 220 flow, if a position at which the light-transmitting region is located and a size of the light-transmitting region is changed, the size of the aperture also changes, thereby implementing adjustment of the size of the aperture.

The driving mechanism is configured to drive the light-transmitting fluid 210 and the light-shielding fluid 220 to flow. When the light-transmitting fluid 210 and the light-shielding fluid 220 flow, an area of the light-transmitting region and an area of the light-shielding region may be changed. That is, the light-transmitting fluid 210 and the light-shielding fluid 220 may be driven, by the driving mechanism, to flow in the sealed chamber, to implement adjustment of the size of the aperture.

In a case that the area of the light-transmitting region is less than a preset area, the variable aperture is in a small aperture mode, and the first light-supplementing element 300 emits light. In the small aperture mode, especially in the small aperture mode, and in case of close-up photography or macro photography, an ambient brightness is low, and light is supplemented by using the first light-supplementing element 300 to improve the ambient brightness, thereby increasing an amount of light penetrating the variable aperture, finally increasing definition of an image shot in the small aperture mode, and improving quality of the shot image.

When shooting is performed in the small aperture mode, close-up photography or macro photography is usually performed. If a light intensity of the first light-supplementing element 300 is extremely large, a shot image is overexposed. Therefore, a power and an intensity of the first light-supplementing element 300 are small, to prevent the shot image from being overexposed due to the extremely large light intensity. Optionally, the first light-supplementing element 300 may be a light-emitting strip.

In an embodiment of this application, the driving mechanism drives the light-transmitting fluid 210 and the light-shielding fluid 220 to flow, which can change the area of the light-transmitting region. The size of the light-transmitting region is the size of the aperture, that is, the driving mechanism drives the light-transmitting fluid 210 and the light-shielding fluid 220 to flow, thereby implementing adjustment of the size of the aperture. In addition, in a case that the area of the light-transmitting region is smaller than the preset area, the first light-supplementing element 300 emits light, which can improve a brightness of a shooting environment, thereby improving an amount of entered light in a small aperture shooting mode, and further improving quality of an image shot in the small aperture shooting mode. It can be learned that the variable aperture disclosed in this application can resolve a problem, in related technologies, of poor image quality due to a small amount of entered light when the camera module performs shooting in the small aperture mode.

To provide electric energy required for the first light-supplementing element 300 to emit light, in a case that the variable aperture is installed in the camera module, the first light-supplementing element 300 may be connected to the circuit board 950 of the camera module, and then the first light-supplementing element 300 is supplied with power and controlled by using the circuit board 950. However, adding of the first light-supplementing element 300 increases overall power consumption of the camera module. In a case that the camera module is installed in the electronic device, the overall power consumption of the camera module increases, so that a battery life of the electronic device becomes worse, and use experience of a user is affected.

To resolve the foregoing problem, the variable aperture disclosed in the embodiment of this application further includes a photocell 400, and the first light-supplementing element 300 is electrically connected to the photocell 400. Optionally, the photocell 400 may be a photovoltaic cell. The photocell 400 can convert solar energy into electrical energy to provide the first light-supplementing element 300 with the electrical energy required for light emission. In this case, the first light-supplementing element 300 does not need to consume additional electric power of the camera module, so that a problem of increase of the power consumption of the camera module due to adding of the first light-supplementing element 300 is prevented, and power consumption of the camera module is reduced. In addition, the photocell 400 supplies power to the first light-supplementing element 300, so that light energy incident in the camera module can be fully used, to play a role in reducing electric power energy.

The photocell 400 may be installed on a light-incoming surface of the variable aperture. For example, in a case that the first light-transmitting substrate 110 is located on a light-incoming side of the variable aperture, the photocell 400 may be installed on a surface of the first light-transmitting substrate 110. However, in this installation manner, a thickness of the variable aperture is increased, and a thickness of the camera module is further increased.

For this reason, the photocell 400 is disposed in the sealed chamber, and the light-shielding fluid 220 may cover the photocell 400. When the light-shielding fluid 220 flows, a light-absorbing surface of the photocell 400 may be exposed outside the light-shielding fluid 220. In a case that the area of the light-transmitting region is smaller than the preset area, the photocell 400 is exposed outside the light-shielding fluid 220, and the photocell 400 receives ambient light to generate electric energy for the first light-supplementing element 300 to emit light. In this case, space of the sealed chamber can be fully used, and the thickness of the variable aperture can be effectively reduced.

In addition, if the light-shielding fluid 220 does not block the photocell 400, the photocell 400 is always exposed to external light, and related parts such as a control component need to be disposed to control the photocell 400, so that the photocell 400 receives the external light in the small aperture mode. In the embodiment disclosed in this application, as the area of the light-transmitting region decreases, that is, in a process in which a large aperture is switched to a small aperture, the photocell 400 is automatically exposed outside the light-shielding fluid 220, to supply power to the first light-supplementing element 300, without additional related parts such as the control component. Therefore, a quantity of parts used for the variable aperture is reduced, and costs are reduced.

The photocell 400 is disposed in the sealed chamber. To prevent a damage to the photocell 400 because an unnecessary reaction is generated between the light-transmitting fluid 210 and the light-shielding fluid 220 in the sealed chamber, and the photocell 400, in an embodiment disclosed in this application, the variable aperture may further include a first installation housing. The first installation housing is a light-transmitting structure, the photocell 400 may be disposed in the first installation housing. The first installation housing is disposed in the sealed chamber, and the first installation housing may be connected to the first light-transmitting substrate 110 or the second light-transmitting substrate 120.

In an embodiment disclosed in this application, the sealed chamber may include a first flow channel 510 and a second flow channel 520. The first flow channel 510 is close to the first light-transmitting substrate 110, and the second flow channel 520 is close to the second light-transmitting substrate 120. The first flow channel 510 is in connection with the second flow channel 520. The light-transmitting fluid 210 and the light-shielding fluid 220 may circularly flow between the first flow channel 510 and the second flow channel 520, to change positions at which the light-transmitting fluid 210 and the light-shielding fluid 220 are respectively located, and further change the size of the light-transmitting region, implementing adjustment of the size of the aperture. In this case, the first flow channel 510 and the second flow channel 520 limit flow paths and flow ranges of the light-transmitting fluid 210 and the light-shielding fluid 220, and play a role in guiding flowing of the light-transmitting fluid 210 and the light-shielding fluid 220, so that the size of the aperture is adjusted precisely.

There is a plurality of manners in which the first flow channel 510 and the second flow channel 520 are formed in the sealed chamber. In an optional embodiment, the variable aperture may further include a light-transmitting partition 130. The light-transmitting partition 130 is located between the first light-transmitting substrate 110 and the second light-transmitting substrate 120, and the first light-transmitting substrate 110, the light-transmitting partition 130, and the second light-transmitting substrate 120 may be arranged in parallel. A side, close to the first light-transmitting substrate 110, of the light-transmitting partition 130 forms the first flow channel 510. A side, close to the second light-transmitting substrate 120, of the light-transmitting partition 130 forms the second flow channel 520. The light-transmitting partition 130 may be a transparent glass structural member or a transparent resin structural member.

In the foregoing solution, the photocell 400 is disposed in the sealed chamber through the first installation housing. The first installation housing may be disposed on the first light-transmitting substrate 110 and the second light-transmitting substrate 120. The first installation housing may alternatively be disposed on the light-transmitting partition 130. The first installation housing is disposed on the light-transmitting partition 130, to better help install the first installation housing.

In a further technical solution, the variable aperture may further include a first sealing structural member 140 and a second sealing structural member 150. The first sealing structural member 140 is connected to the first light-transmitting substrate 110 and the light-transmitting partition 130 in a sealing manner. The first light-transmitting substrate 110, the first sealing structural member 140, and the light-transmitting partition 130 jointly form the first flow channel 510 in an enclosing manner. The second sealing structural member 150 is connected to the second light-transmitting substrate 120 and the light-transmitting partition 130 in a sealing manner. The second light-transmitting substrate 120, the second sealing structural member 150, and the light-transmitting partition 130 jointly form the second flow channel 520 in an enclosing manner. Optionally, the first sealing structural member 140 and the second sealing structural member 150 may be annular sealing rings.

To implement communication between the first flow channel 510 and the second flow channel 520, the light-transmitting partition 130 may be provided with a first through hole 131. The first through hole 131 is in connection with the first flow channel 510 and the second flow channel 520. The light-transmitting fluid 210 circularly flows between the first flow channel 510 and the second flow channel 520 through the first through hole 131. The light-transmitting partition 130 may further be provided with a second through hole. The second through hole is in connection with the first flow channel 510 and the second flow channel 520. The light-shielding fluid 220 circularly flows between the first flow channel 510 and the second flow channel 520 through the second through hole.

During assembly and use of the camera module, a center of the light-transmitting region needs to align with a center of a lens 910. To help align the center of the light-transmitting region with the center of the lens 910 of the camera module, in an embodiment of this application, the center of the light-transmitting region is located at a center of the variable aperture, and the light-shielding region is disposed around the light-transmitting region. In this case, the center of the light-transmitting region is located at the center of the variable aperture, that is, a center of an aperture is located at the center of the variable aperture. During installation of the camera module, it is required only that the center of the variable aperture is aligned with the center of the lens 910, which reduces an assembly difficulty for the camera module.

Specifically, the first through hole 131 may be disposed at the center of the variable aperture, and a plurality of second through holes may be disposed. The plurality of second through holes are disposed around the first through hole 131. The second through holes are arranged evenly at an interval in a circumferential direction of the light-transmitting partition 130, so that the center of the light-transmitting region is located at the center of the variable aperture, and the light-shielding region is disposed around the light-transmitting region.

In the foregoing solution, the driving mechanism is configured to drive the light-transmitting fluid 210 and the light-shielding fluid 220 to flow. There are a plurality of types of driving mechanisms. For example, the driving mechanism may include a first electrode and a second electrode. The first electrode may be disposed on a side, facing the sealed chamber, of the first light-transmitting substrate 110. The second electrode may be disposed on a side, facing the sealed chamber, of the second light-transmitting substrate 120. One of the light-transmitting fluid 210 and the light-shielding fluid 220 may be liquid metal. The first electrode and the second electrode can generate an electric field after being electrified, and an electric field force that can drive the liquid metal to flow is further generated, to drive the light-transmitting fluid 210 and the light-shielding fluid 220 to flow.

Of course, the driving mechanism may further be of another structure. In an embodiment disclosed in this application, the driving mechanism may be a coil 600. At least one of the light-transmitting fluid 210 or the light-shielding fluid 220 is magnetic fluid. In a case that the coil 600 is in an electrified state, the coil 600 magnetically cooperates with the magnetic fluid, to generate an electromagnetic force. The electromagnetic force drives the light-transmitting fluid 210 to flow into the first flow channel 510, and the electromagnetic force drives the light-shielding fluid 220 to flow into the second flow channel 520, to reduce an area of a region, perpendicular to a light incidence direction, in the light-transmitting region, that is, to reduce the size of the aperture, and further implement adjustment of the size of the aperture. In this case, the coil 600 is electrified to generate a magnetic field, and the magnetic fluid flows under an action of the magnetic field, thereby implementing adjustment of the size of the aperture.

For example, the light-shielding fluid 220 may be magnetic fluid. In a case that the coil 600 is electrified, the coil 600 generates the magnetic field, and the magnetic field generated by the coil 600 magnetically cooperates with the light-shielding fluid 220, to generate a magnetic field force that drives the light-shielding fluid 220 to flow into the second flow channel 520. In addition, because the first flow channel 510 and the second flow channel 520 are filled with the light-transmitting fluid 210 and the light-shielding fluid 220, when the light-shielding fluid 220 flows, the light-transmitting fluid 210 is squeezed, so that the light-transmitting fluid 210 flows into the first flow channel 510.

In addition, a different magnitude of the magnetic field force indicates a different position at which the magnetic fluid flows, and a size of a generated aperture may be controlled by controlling a magnitude of a current through the coil 600.

In the foregoing solution, in a case that the coil 600 is electrified, a direction of a force applied to fluid in the first flow channel 510 and a direction of a force applied to fluid in the second flow channel 520 are opposite to each other. To achieve this purpose, a direction of a current through a side, close to the first flow channel 510, of the coil 600 is opposite to a direction of a current through a side, close to the second flow channel 520, of the coil 600, so that a direction of a magnetic field force applied to the fluid in the first flow channel 510 and a direction of a magnetic field force applied to the fluid in the second flow channel 520 are opposite to each other, and the fluid in the first flow channel 510 and the fluid in the second flow channel 520 flow in different directions. Of course, in another embodiment, the variable aperture may alternatively include two coils 600, and directions of the currents through the two coils 600 are opposite to each other.

The coil 600 may be disposed on an outer surface of the first light-transmitting substrate 110 or the second light-transmitting substrate 120. However, a thickness of the variable aperture is increased in this disposing manner. For this reason, in an embodiment disclosed in this application, the coil 600 may be located in the sealed chamber, to reduce the thickness of the variable aperture.

Specifically, the variable aperture may further include a second installation housing. The second installation housing may be a light-transmitting structure, and the coil 600 may be disposed in the second installation housing. The second installation housing is disposed in the sealed chamber, and the second installation housing may be connected to the first light-transmitting substrate 110 or the second light-transmitting substrate 120. In the foregoing solution, the light-transmitting partition 130 is disposed in the sealed chamber, and the second installation housing may alternatively be connected to the light-transmitting partition 130. In this case, installation of the coil 600 can be implemented, and fluid can be separated from the coil 600, so that the coil 600 is protected.

To enable all parts of the magnetic fluid to bear an even force, in an embodiment disclosed in this application, the light-transmitting fluid 210 may be distributed in a circle, and the light-shielding fluid 220 is disposed around the light-transmitting fluid 210. Therefore, the light-shielding fluid 220 is distributed annularly, the light-transmitting fluid 210 and the light-shielding fluid 220 are disposed concentrically, the coil 600 may be disposed as an annular structure, and the coil 600 and the light-shielding fluid 220 are disposed concentrically. In this case, in a circumferential direction of the magnetic fluid, all parts of the magnetic fluid bear the even force and flow synchronously, to prevent a central position of the light-transmitting region from changing because all parts of the magnetic fluid bear uneven forces.

In a further technical solution, the light-shielding fluid 220 may cover the coil 600. In this case, light can be prevented from being blocked by the coil 600, space in the sealed chamber can be fully used, and a volume of the variable aperture can be reduced.

To supply power to the coil 600, the variable aperture may further include a power supply 610. The power supply 610 is electrically connected to the coil 600 through a coil wire 620, to supply power to the coil 600 by using the power supply 610. The variable aperture may further include a power supply carrier 630. The power supply 610 may be disposed in the power supply carrier 630, and the power supply carrier 630 provides an installation basis for the power source 610.

To implement a better light supplementing effect, the first light-supplementing element 300 may be of an annular structure, and the first light-supplementing element 300 is disposed at an edge position of the first light-transmitting substrate 110. Optionally, the first light-supplementing element 300 may be a light-emitting annular strip. In this case, the first light-supplementing element 300 may supplement light in all directions, to ensure that brightnesses in all directions of a shooting background are the same, preventing a poor image effect due to different brightnesses in different directions of the shooting background.

In a further technical solution, the variable aperture may further include a protective structural member 800. The protective structural member 800 may be a protective gasket, and the protective gasket may be sleeved on a side of the variable aperture. The protective gasket may fasten a shape of the variable aperture and prevent leakage of the light-transmitting fluid 210 and the light-shielding fluid 220 in the sealed chamber.

The variable aperture may further include a light-transmitting cover plate 700. The light-transmitting cover plate 700 covers the first light-transmitting substrate 110, to protect the first light-transmitting substrate 110. Optionally, the light-transmitting cover plate 700 may be a glass cover plate or a polymer resin cover plate.

Based on the variable aperture in the foregoing embodiment of this application, an embodiment of this application further discloses a camera module. The disclosed camera module may be used in an electronic device. The disclosed camera module includes the variable aperture in the foregoing embodiment, and the disclosed camera module further includes a lens 910, a driving motor 920, a photosensitive element 930, an optical filter 940, and a circuit board 950.

The variable aperture is disposed opposite to the lens 910, and the variable aperture is located on a light inlet side of the lens 910. An amount of entered light for the lens 910 is adjusted by adjusting a size of the aperture. The lens 910 includes a lens element and a lens barrel, and the lens element is disposed in the lens barrel.

The lens 910 is connected to the driving motor 920. The driving motor 920 may drive the lens 910 to move in an optical axis direction of the lens 910. The driving motor 920 is electrically connected to the circuit board 950, and the driving motor 920 is supplied with power and controlled by using the circuit board 950. Optionally, the camera module further includes a base 970. The base 970 is configured to support the driving motor 920.

A photosensitive surface of the photosensitive element 930 is opposite to the lens 910, so that light entering through the lens 910 may be incident into the photosensitive surface of the photosensitive element 930. Optionally, the photosensitive element 930 may be a CMOS (Complementary Metal Oxide Semiconductor, complementary metal oxide semiconductor), the photosensitive element 930 is electrically connected to the circuit board 950 through a photosensitive element wire 931, to supply power to and control the photosensitive element 930 by using the circuit board 950.

The optical filter 940 is disposed between the lens 910 and the photosensitive surface of the photosensitive element 930. The optical filter 940 can filter out stray light such as infrared light in light that enters the photosensitive element 930, to obtain a better imaging effect and improve quality of a shot image. Optionally, the camera module may further include an optical filter support 960. The optical filter 940 is disposed on the optical filter support 960, and the optical filter support 960 is disposed on the base 970.

Based on the camera module in the foregoing embodiment of this application, an embodiment of this application further discloses an electronic device. The disclosed electronic device includes the camera module in the foregoing embodiment.

To obtain a better shooting effect, the electronic device may further include a second light-supplementing element. The second light-supplementing element is configured to supplement light to the lens 910 in a large aperture shooting mode, to increase an amount of light through the lens 910, thereby improving a shooting effect. Because the large aperture mode may be used for shooting in an extreme night environment or shooting in a long distance, the second light-supplementing element has a higher intensity and power. Optionally, the second light-supplementing element may be a flashlight.

The electronic device disclosed in embodiments of this application may be a smartphone, a tablet computer, an e-book reader, or a wearable device. Of course, the electronic device may alternatively be another device. This is not limited in embodiments of this application.

The embodiments of this application are described above with reference to the accompanying drawings, but this application is not limited to the foregoing implementations, and the foregoing implementations are only illustrative and not restrictive. Under the enlightenment of this application, a person of ordinary skill in the art can make many forms without departing from the purpose of this application and the protection scope defined by the claims.

## Claims

1. A variable aperture, comprising a first light-transmitting substrate (110), a second light-transmitting substrate (120), light-transmitting fluid (210), light-shielding fluid (220), a driving mechanism, and a first light-supplementing element (300), wherein
the first light-transmitting substrate (110) and the second light-transmitting substrate (120) are disposed opposite to each other, a sealed chamber is disposed between the first light-transmitting substrate (110) and the second light-transmitting substrate (120), the light-transmitting fluid (210) and the light-shielding fluid (220) are fluidly provided in the sealed chamber, and the light-transmitting fluid (210) and the light-shielding fluid (220) are immiscible with each other, the light-transmitting fluid (210) and the light-shielding fluid (220) are used to form a light-transmitting region and a light-shielding region, and the light-shielding region is disposed around the light-transmitting region;
the driving mechanism is configured to drive the light-transmitting fluid (210) and the light-shielding fluid (220) to flow, and when the light-transmitting fluid (210) and the light-shielding fluid (220) flow, an area of the light-transmitting region and an area of the light-shielding region may be changed; and
in a case that the area of the light-transmitting region is less than a preset area, the first light-supplementing element (300) emits light;
**characterized in that**
the variable aperture further comprises a photocell (400), and the photocell (400) is electrically connected to the first light-supplementing element (300);
wherein the photocell (400) is disposed in the sealed chamber, the light-shielding fluid (220) covers the photocell (400), when the light-shielding fluid (220) flows, a light-absorbing surface of the photocell (400) is enabled to be exposed outside the light-shielding fluid (220), in a case that the area of the light-transmitting region is smaller than the preset area, the photocell (400) is exposed outside the light-shielding fluid (220), and the photocell (400) receives ambient light to generate electric energy for the first light-supplementing element (300) to emit light.

2. The variable aperture according to claim 1, wherein the sealed chamber comprises a first flow channel (510) and a second flow channel (520), the first flow channel (510) is close to the first light-transmitting substrate (110), the second flow channel (520) is close to the second light-transmitting substrate (120), the first flow channel (510) is in connection with the second flow channel (520), and the light-transmitting fluid (210) and the light-shielding fluid (220) are capable of flowing circularly between the first flow channel (510) and the second flow channel (520).

3. The variable aperture according to claim 2, wherein a center of the light-transmitting region is located at a center of the variable aperture, in a case that the driving mechanism drives the light-transmitting fluid (210) and the light-shielding fluid (220) to flow, the light-transmitting fluid (210) and the light-shielding fluid (220) in the first flow channel (510) flow in a direction away from the center of the variable aperture, and the light-transmitting fluid (210) and the light-shielding fluid (220) in the second flow channel (520) flow in a direction close to the center of the variable aperture.

4. The variable aperture according to claim 2, wherein the driving mechanism is a coil (600), the coil (600) is located in the sealed chamber, and at least one of the light-transmitting fluid (210) or the light-shielding fluid (220) is magnetic fluid; and
in a case that the coil (600) is in an electrified state, the coil (600) magnetically cooperates with the magnetic fluid, to generate an electromagnetic force, the electromagnetic force drives the light-transmitting fluid (210) to flow into the first flow channel (510), and the electromagnetic force drives the light-shielding fluid (220) to flow into the second flow channel (520), to reduce an area of a region, perpendicular to a light incidence direction, in the light-transmitting region.

5. The variable aperture according to claim 4, wherein the light-transmitting fluid (210) is distributed in a circle, the light-shielding fluid (220) is distributed annularly, the light-transmitting fluid (210) and the light-shielding fluid (220) are disposed concentrically, the coil (600) is an annular structure, and the coil (600) and the light-shielding fluid (220) are disposed concentrically.

6. The variable aperture according to claim 4, wherein the light-shielding fluid (220) covers the coil (600).

7. The variable aperture according to claim 1, wherein the first light-supplementing element (300) is an annular structure, and the first light-supplementing element (300) is disposed at an edge position of the first light-transmitting substrate (110).

8. A camera module, **characterized by** comprising a variable aperture, a lens (910), a driving motor (920), a photosensitive element (930), an optical filter (940), and a circuit board (950), wherein
the variable aperture is disposed opposite to the lens (910), the variable aperture is located on a light inlet side of the lens (910), and the variable aperture is the variable aperture according to any one of claims 1 to 7;
the lens (910) is connected to the driving motor (920), the driving motor (920) is capable of driving the lens (910) to move in a direction of an optical axis of the lens (910), and the driving motor (920) is electrically connected to the circuit board (950); and
the photosensitive element (930) is disposed opposite to the lens (910), and the photosensitive element (930) is electrically connected to the circuit board (950); and
the optical filter (940) is disposed between the lens (910) and the photosensitive element (930).

9. An electronic device, **characterized by** comprising the camera module according to claim 8.

## Patentansprüche

1. Eine variable Blende, umfassend ein erstes lichtdurchlässiges Substrat (110), ein zweites lichtdurchlässiges Substrat (120), ein lichtdurchlässiges Fluid (210), ein lichtabschirmendes Fluid (220), einen Antriebsmechanismus und ein erstes Zusatzlichtelement (300), wobei
das erste lichtdurchlässige Substrat (110) und das zweite lichtdurchlässige Substrat (120) einander gegenüberliegend angeordnet sind, eine abgedichtete Kammer zwischen dem ersten lichtdurchlässigen Substrat (110) und dem zweiten lichtdurchlässigen Substrat (120) angeordnet ist, das lichtdurchlässige Fluid (210) und das lichtabschirmende Fluid (220) fluidisch in der abgedichteten Kammer vorgesehen sind und das lichtdurchlässige Fluid (210) und das lichtabschirmende Fluid (220) nicht miteinander mischbar sind, das lichtdurchlässige Fluid (210) und das lichtabschirmende Fluid (220) dazu verwendet werden, einen lichtdurchlässigen Bereich und einen lichtabschirmenden Bereich zu bilden, und der lichtabschirmende Bereich um den lichtdurchlässigen Bereich herum angeordnet ist;
der Antriebsmechanismus dazu eingerichtet ist, das lichtdurchlässige Fluid (210) und das lichtabschirmende Fluid (220) zum Strömen anzutreiben, und, wenn das lichtdurchlässige Fluid (210) und das lichtabschirmende Fluid (220) strömen, eine Fläche des lichtdurchlässigen Bereichs und eine Fläche des lichtabschirmenden Bereichs verändert werden können; und
in einem Fall, in dem die Fläche des lichtdurchlässigen Bereichs kleiner als eine vorgegebene Fläche ist, das erste Zusatzlichtelement (300) Licht emittiert;
**dadurch gekennzeichnet, dass**
die variable Blende ferner eine Fotozelle (400) umfasst und die Fotozelle (400) mit dem ersten Zusatzlichtelement (300) elektrisch verbunden ist;
wobei die Fotozelle (400) in der abgedichteten Kammer angeordnet ist, das lichtabschirmende Fluid (220) die Fotozelle (400) bedeckt, wenn das lichtabschirmende Fluid (220) strömt, ermöglicht wird, dass eine lichtabsorbierende Oberfläche der Fotozelle (400) außerhalb des lichtabschirmenden Fluids (220) freigelegt wird, in einem Fall, in dem die Fläche des lichtdurchlässigen Bereichs kleiner als die vorgegebene Fläche ist, die Fotozelle (400) außerhalb des lichtabschirmenden Fluids (220) freigelegt ist und die Fotozelle (400) Umgebungslicht empfängt, um elektrische Energie dafür zu erzeugen, dass das erste Zusatzlichtelement (300) Licht emittiert.

2. Die variable Blende nach Anspruch 1, wobei die abgedichtete Kammer einen ersten Strömungskanal (510) und einen zweiten Strömungskanal (520) umfasst, der erste Strömungskanal (510) nahe dem ersten lichtdurchlässigen Substrat (110) liegt, der zweite Strömungskanal (520) nahe dem zweiten lichtdurchlässigen Substrat (120) liegt, der erste Strömungskanal (510) mit dem zweiten Strömungskanal (520) verbunden ist und das lichtdurchlässige Fluid (210) und das lichtabschirmende Fluid (220) zwischen dem ersten Strömungskanal (510) und dem zweiten Strömungskanal (520) im Kreis strömen können.

3. Die variable Blende nach Anspruch 2, wobei ein Zentrum des lichtdurchlässigen Bereichs in einem Zentrum der variablen Blende liegt, in einem Fall, in dem der Antriebsmechanismus das lichtdurchlässige Fluid (210) und das lichtabschirmende Fluid (220) zum Strömen antreibt, das lichtdurchlässige Fluid (210) und das lichtabschirmende Fluid (220) in dem ersten Strömungskanal (510) in einer Richtung von dem Zentrum der variablen Blende weg strömen und das lichtdurchlässige Fluid (210) und das lichtabschirmende Fluid (220) in dem zweiten Strömungskanal (520) in einer Richtung zu dem Zentrum der variablen Blende hin strömen.

4. Die variable Blende nach Anspruch 2, wobei der Antriebsmechanismus eine Spule (600) ist, die Spule (600) in der abgedichteten Kammer angeordnet ist und zumindest eines von dem lichtdurchlässigen Fluid (210) oder dem lichtabschirmenden Fluid (220) ein magnetisches Fluid ist; und
in einem Fall, in dem sich die Spule (600) in einem bestromten Zustand befindet, die Spule (600) magnetisch mit dem magnetischen Fluid zusammenwirkt, um eine elektromagnetische Kraft zu erzeugen, die elektromagnetische Kraft das lichtdurchlässige Fluid (210) dazu antreibt, in den ersten Strömungskanal (510) zu strömen, und die elektromagnetische Kraft das lichtabschirmende Fluid (220) dazu antreibt, in den zweiten Strömungskanal (520) zu strömen, um eine Fläche eines Bereichs in dem lichtdurchlässigen Bereich, der senkrecht zu einer Lichteinfallsrichtung ist, zu verkleinern.

5. Die variable Blende nach Anspruch 4, wobei das lichtdurchlässige Fluid (210) in einem Kreis verteilt ist, das lichtabschirmende Fluid (220) ringförmig verteilt ist, das lichtdurchlässige Fluid (210) und das lichtabschirmende Fluid (220) konzentrisch angeordnet sind, die Spule (600) eine ringförmige Struktur ist und die Spule (600) und das lichtabschirmende Fluid (220) konzentrisch angeordnet sind.

6. Die variable Blende nach Anspruch 4, wobei das lichtabschirmende Fluid (220) die Spule (600) bedeckt.

7. Die variable Blende nach Anspruch 1, wobei das erste Zusatzlichtelement (300) eine ringförmige Struktur ist und das erste Zusatzlichtelement (300) an einer Randposition des ersten lichtdurchlässigen Substrats (110) angeordnet ist.

8. Ein Kameramodul, **dadurch gekennzeichnet, dass** es eine variable Blende, eine Linse (910), einen Antriebsmotor (920), ein lichtempfindliches Element (930), einen optischen Filter (940) und eine Leiterplatte (950) umfasst, wobei
die variable Blende der Linse (910) gegenüberliegend angeordnet ist, die variable Blende auf einer Lichteintrittsseite der Linse (910) angeordnet ist und die variable Blende die variable Blende nach einem der Ansprüche 1 bis 7 ist;
die Linse (910) mit dem Antriebsmotor (920) verbunden ist, der Antriebsmotor (920) die Linse (910) in einer Richtung einer optischen Achse der Linse (910) bewegen kann und der Antriebsmotor (920) mit der Leiterplatte (950) elektrisch verbunden ist; und
das lichtempfindliche Element (930) der Linse (910) gegenüberliegend angeordnet ist und das lichtempfindliche Element (930) mit der Leiterplatte (950) elektrisch verbunden ist; und
der optische Filter (940) zwischen der Linse (910) und dem lichtempfindlichen Element (930) angeordnet ist.

9. Eine elektronische Vorrichtung, **dadurch gekennzeichnet, dass** sie das Kameramodul nach Anspruch 8 umfasst.

## Revendications

1. Une ouverture variable, comprenant un premier substrat (110) transmettant la lumière, un second substrat (120) transmettant la lumière, un fluide (210) transmettant la lumière, un fluide (220) occultant la lumière, un mécanisme d'entraînement, et un premier élément d'éclairage d'appoint (300), dans laquelle
le premier substrat (110) transmettant la lumière et le second substrat (120) transmettant la lumière sont disposés l'un en face de l'autre, une chambre étanche est disposée entre le premier substrat (110) transmettant la lumière et le second substrat (120) transmettant la lumière, le fluide (210) transmettant la lumière et le fluide (220) occultant la lumière sont prévus de manière fluide dans la chambre étanche, et le fluide (210) transmettant la lumière et le fluide (220) occultant la lumière sont non miscibles l'un avec l'autre, le fluide (210) transmettant la lumière et le fluide (220) occultant la lumière sont utilisés pour former une région transmettant la lumière et une région occultant la lumière, et la région occultant la lumière est disposée autour de la région transmettant la lumière ;
le mécanisme d'entraînement est configuré pour entraîner l'écoulement du fluide (210) transmettant la lumière et celui du fluide (220) occultant la lumière, et lorsque le fluide (210) transmettant la lumière et le fluide (220) occultant la lumière s'écoulent, une aire de la région transmettant la lumière et une aire de la région occultant la lumière peuvent être modifiées ; et
dans le cas où l'aire de la région transmettant la lumière est inférieure à une aire prédéfinie, le premier élément d'éclairage d'appoint (300) émet de la lumière ;
**caractérisée en ce que**
l'ouverture variable comprend en outre une cellule photoélectrique (400), et la cellule photoélectrique (400) est connectée électriquement au premier élément d'éclairage d'appoint (300) ;
dans laquelle la cellule photoélectrique (400) est disposée dans la chambre étanche, le fluide (220) occultant la lumière recouvre la cellule photoélectrique (400), lorsque le fluide (220) occultant la lumière s'écoule, une surface absorbant la lumière de la cellule photoélectrique (400) peut être exposée hors du fluide (220) occultant la lumière, dans le cas où l'aire de la région transmettant la lumière est inférieure à l'aire prédéfinie, la cellule photoélectrique (400) est exposée hors du fluide (220) occultant la lumière, et la cellule photoélectrique (400) reçoit la lumière ambiante pour générer de l'énergie électrique permettant au premier élément d'éclairage d'appoint (300) d'émettre de la lumière.

2. L'ouverture variable selon la revendication 1, dans laquelle la chambre étanche comprend un premier canal d'écoulement (510) et un second canal d'écoulement (520), le premier canal d'écoulement (510) est proche du premier substrat (110) transmettant la lumière, le second canal d'écoulement (520) est proche du second substrat (120) transmettant la lumière, le premier canal d'écoulement (510) est en communication avec le second canal d'écoulement (520), et le fluide (210) transmettant la lumière et le fluide (220) occultant la lumière sont capables de circuler de manière circulaire entre le premier canal d'écoulement (510) et le second canal d'écoulement (520).

3. L'ouverture variable selon la revendication 2, dans laquelle un centre de la région transmettant la lumière est situé au centre de l'ouverture variable, dans le cas où le mécanisme d'entraînement entraîne l'écoulement du fluide (210) transmettant la lumière et celui du fluide (220) occultant la lumière, le fluide (210) transmettant la lumière et le fluide (220) occultant la lumière dans le premier canal d'écoulement (510) s'écoulent dans une direction s'éloignant du centre de l'ouverture variable, et le fluide (210) transmettant la lumière et le fluide (220) occultant la lumière dans le second canal d'écoulement (520) s'écoulent dans une direction se rapprochant du centre de l'ouverture variable.

4. L'ouverture variable selon la revendication 2, dans laquelle le mécanisme d'entraînement est une bobine (600), la bobine (600) est située dans la chambre étanche, et au moins l'un du fluide (210) transmettant la lumière ou du fluide (220) occultant la lumière est un fluide magnétique ; et
dans le cas où la bobine (600) est dans un état alimenté en électricité, la bobine (600) coopère magnétiquement avec le fluide magnétique, pour générer une force électromagnétique, la force électromagnétique entraîne le fluide (210) transmettant la lumière à s'écouler dans le premier canal d'écoulement (510), et la force électromagnétique entraîne le fluide (220) occultant la lumière à s'écouler dans le second canal d'écoulement (520), pour réduire une aire d'une zone, perpendiculaire à une direction d'incidence de la lumière, dans la région transmettant la lumière.

5. L'ouverture variable selon la revendication 4, dans laquelle le fluide (210) transmettant la lumière est réparti en cercle, le fluide (220) occultant la lumière est réparti de manière annulaire, le fluide (210) transmettant la lumière et le fluide (220) occultant la lumière sont disposés de manière concentrique, la bobine (600) est une structure annulaire, et la bobine (600) et le fluide (220) occultant la lumière sont disposés de manière concentrique.

6. L'ouverture variable selon la revendication 4, dans laquelle le fluide (220) occultant la lumière recouvre la bobine (600).

7. L'ouverture variable selon la revendication 1, dans laquelle le premier élément d'éclairage d'appoint (300) est une structure annulaire, et le premier élément d'éclairage d'appoint (300) est disposé à une position de bord du premier substrat (110) transmettant la lumière.

8. Un module de caméra, **caractérisé en ce qu'**il comprend une ouverture variable, une lentille (910), un moteur d'entraînement (920), un élément photosensible (930), un filtre optique (940), et une carte de circuit imprimé (950), dans lequel
l'ouverture variable est disposée en face de la lentille (910), l'ouverture variable est située du côté d'entrée de la lumière de la lentille (910), et l'ouverture variable est l'ouverture variable selon l'une quelconque des revendications 1 à 7 ;
la lentille (910) est reliée au moteur d'entraînement (920), le moteur d'entraînement (920) est capable d'entraîner la lentille (910) à se déplacer dans une direction d'un axe optique de la lentille (910), et le moteur d'entraînement (920) est connecté électriquement à la carte de circuit imprimé (950) ; et
l'élément photosensible (930) est disposé en face de la lentille (910), et l'élément photosensible (930) est connecté électriquement à la carte de circuit imprimé (950) ; et
le filtre optique (940) est disposé entre la lentille (910) et l'élément photosensible (930).

9. Un dispositif électronique, **caractérisé en ce qu'**il comprend le module de caméra selon la revendication 8.
